# EUROPEAN PATENT APPLICATION

(11) **EP 4 807 459 A1**
(43) Date of publication of application: **16.09.2026**
(21) Application number: 25192057.5
(22) Date of filing: 28.07.2025
(51) Int. Cl.: G03G 15/20, G03G 15/00, G06N 3/02

(54) **INFORMATION PROCESSING SYSTEM, INFORMATION PROCESSING PROGRAM, AND INFORMATION PROCESSING METHOD**

(30) Priority: 12.03.2025 JP 2025039559
(71) Applicant: FUJIFILM Business Innovation Corp., Minato-ku Tokyo (JP)
(72) Inventor: SEKO, Tomohiro, Ebina-shi, Kanagawa (JP)
(74) Representative: Becker Kurig & Partner Patentanwälte mbB

(57) **Abstract**

An information processing system includes a processor configured to: input, to a trained model corresponding to a configuration related to a fixing device in a printing apparatus that is to perform a new print job among trained models that have been trained in advance for each configuration related to the fixing device in the printing apparatus in order to output a fixing temperature of the fixing device in a case of receiving input information including information about printing paper, new input information including information about printing paper to be newly printed, and output a fixing temperature of the fixing device in the printing apparatus that is to perform the new print job.

## Description

### BACKGROUND OF THE INVENTION

### (i) Field of the Invention

The present disclosure relates to an information processing system, an information processing program, and an information processing method.

### (ii) Description of Related Art

JP2024-123069A discloses a parameter determination device that includes an acquisition unit that acquires data regarding paper basis weight detected by a sensor, and a determination unit that determines a parameter related to paper processing from the acquired data regarding the paper basis weight based on a program using a learning function using machine learning, in which the data regarding the paper basis weight is data regarding the amount of light transmitted in a case where paper is irradiated with light.

### SUMMARY OF THE INVENTION

In a case where a printing apparatus performs printing, it is necessary to set a fixing temperature of a fixing device to an optimum temperature according to settings of printing paper. It is considered to predict and set the fixing temperature according to the settings of the printing paper by using a trained model, but, depending on a configuration of the fixing device in the printing apparatus, the optimum fixing temperature varies. Therefore, the fixing temperature predicted by the trained model may be inappropriate.

Therefore, an object of the present disclosure is to provide an information processing system, an information processing program, and an information processing method capable of predicting a fixing temperature of a fixing device in a printing apparatus according to printing paper, taking into account a configuration related to the fixing device.

According to a first aspect of the present disclosure, there is provided an information processing system including a processor configured to input, to a trained model corresponding to a configuration related to a fixing device in a printing apparatus that is to perform a new print job among trained models that have been trained in advance for each configuration related to the fixing device in the printing apparatus in order to output a fixing temperature of the fixing device in a case of receiving input information including information about printing paper, new input information including information about printing paper to be newly printed, and output a fixing temperature of the fixing device in the printing apparatus that is to perform the new print job.

According to a second aspect of the present disclosure, in the information processing system according to the first aspect, the configuration related to the fixing device may include at least one of a type of the fixing device or a type of a fixing belt.

According to a third aspect of the present disclosure, in the information processing system according to the first or second aspect, the trained models may be trained in advance for each combination of the configuration related to the fixing device and information about toner, and the processor may be configured to input, to a trained model corresponding to a combination of the configuration related to the fixing device and the information about the toner in the printing apparatus that is to perform a new print job among the trained models that have been trained in advance for each combination of the configuration related to the fixing device and the information about the toner, new input information including information about printing paper to be newly printed, and output a fixing temperature of the fixing device in the printing apparatus that is to perform the new print job.

According to a fourth aspect of the present disclosure, in the information processing system according to any one of the first to third aspects, the information about the printing paper may include a basis weight of the printing paper or a type of the printing paper.

According to a fifth aspect of the present disclosure, in the information processing system according to any one of the first to fourth aspects, the processor may be further configured to, on the printing apparatus that is to perform the new print job or a user terminal, display a screen for receiving a selection of the configuration related to the fixing device in the printing apparatus from a user, and input the new input information to a trained model corresponding to the received selection of the configuration related to the fixing device, and output a fixing temperature of the fixing device in the printing apparatus that is to perform the new print job.

According to a sixth aspect of the present disclosure, there is provided an information processing program causing a computer to execute inputting, to a trained model corresponding to a configuration related to a fixing device in a printing apparatus that is to perform a new print job among trained models that have been trained in advance for each configuration related to the fixing device in the printing apparatus in order to output a fixing temperature of the fixing device in a case of receiving input information including information about printing paper, new input information including information about printing paper to be newly printed, and outputting a fixing temperature of the fixing device in the printing apparatus that is to perform the new print job.

According to a seventh aspect of the present disclosure, there is provided an information processing method including inputting, to a trained model corresponding to a configuration related to a fixing device in a printing apparatus that is to perform a new print job among trained models that have been trained in advance for each configuration related to the fixing device in the printing apparatus in order to output a fixing temperature of the fixing device in a case of receiving input information including information about printing paper, new input information including information about printing paper to be newly printed, and outputting a fixing temperature of the fixing device in the printing apparatus that is to perform the new print job.

According to the first aspect of the present disclosure, it is possible to predict the fixing temperature of the fixing device according to the printing paper, taking into account the configuration related to the fixing device in the printing apparatus.

According to the second aspect of the present disclosure, it is possible to predict the fixing temperature of the fixing device according to the printing paper, taking into account at least one of the type of the fixing device or the type of the fixing belt in the printing apparatus.

According to the third aspect of the present disclosure, it is possible to predict the fixing temperature of the fixing device according to the printing paper, taking into account the configuration related to the fixing device and the information about the toner in the printing apparatus.

According to the fourth aspect of the present disclosure, it is possible to predict the fixing temperature of the fixing device according to the basis weight of the printing paper or the type of the printing paper.

According to the fifth aspect of the present disclosure, it is possible to predict the fixing temperature of the fixing device according to the printing paper, taking into account the configuration related to the fixing device in the printing apparatus, which is received from the user.

According to the sixth aspect of the present disclosure, it is possible to predict the fixing temperature of the fixing device according to the printing paper, taking into account the configuration related to the fixing device in the printing apparatus.

According to the seventh aspect of the present disclosure, it is possible to predict the fixing temperature of the fixing device according to the printing paper, taking into account the configuration related to the fixing device in the printing apparatus.

### BRIEF DESCRIPTION OF THE DRAWINGS

Exemplary embodiment(s) of the present invention will be described in detail based on the following figures, wherein:
FIG. 1 is a diagram showing a schematic configuration of an information processing system according to the present exemplary embodiment;
FIG. 2A is a block diagram showing a major configuration of an electrical system of a printing apparatus in the information processing system according to the present exemplary embodiment;
FIG. 2B is a diagram showing a schematic configuration of a fixing device of the printing apparatus in the information processing system according to the present exemplary embodiment;
FIG. 3 is a block diagram showing a major configuration of an electrical system of a management apparatus and a client computer in the information processing system according to the present exemplary embodiment;
FIG. 4 is a functional block diagram showing a functional configuration of the client computer in the information processing system according to the present exemplary embodiment;
FIG. 5 is a diagram showing an example of a trained neural network model;
FIG. 6A is a diagram showing an example of a selection screen displayed on a user interface of the printing apparatus;
FIG. 6B is a diagram showing an example of a selection screen displayed on the user interface of the printing apparatus;
FIG. 6C is a diagram showing an example of a selection screen displayed on the user interface of the printing apparatus;
FIG. 6D is a diagram showing an example of a selection screen displayed on the user interface of the printing apparatus;
FIG. 7 is a diagram showing an example of a selection screen displayed on the user interface of the printing apparatus;
FIG. 8 is a flowchart showing an example of a flow of a learning process performed by the client computer of the information processing system according to the present exemplary embodiment; and
FIG. 9 is a flowchart showing an example of a flow of an estimation process performed by the client computer of the information processing system according to the present exemplary embodiment.

### DETAILED DESCRIPTION OF THE INVENTION

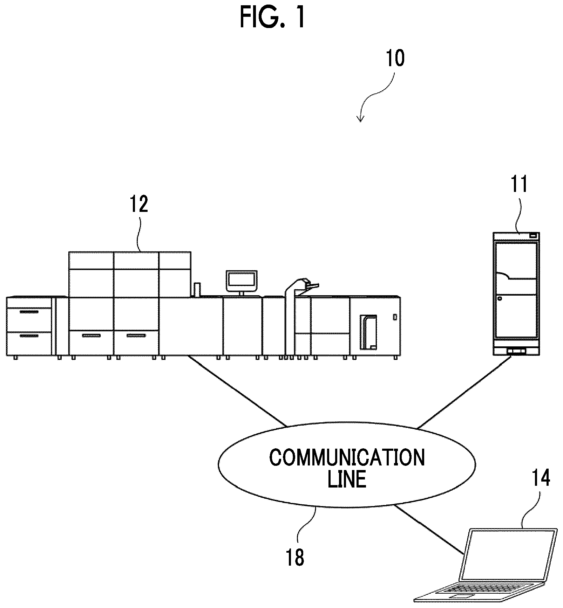

Hereinafter, an example of the present exemplary embodiment will be described in detail with reference to the drawings. In the present exemplary embodiment, an information processing system in which a management apparatus, a printing apparatus, a client computer, and the like are connected to each other via communication lines such as various networks is described as an example. FIG. 1 is a diagram showing a schematic configuration of an information processing system 10 according to the present exemplary embodiment.

As shown in FIG. 1, the information processing system 10 according to the present exemplary embodiment includes a management apparatus 11, a printing apparatus 12, a client computer 14, and the like. The management apparatus 11, the printing apparatus 12, and the client computer 14 are connected to each other via a communication line 18 such as a local area network (LAN), a wide area network (WAN), the Internet, and an intranet. Then, each of the management apparatus 11, the printing apparatus 12, and the client computer 14 can transmit and receive various data to and from each other via the communication line 18. In the present exemplary embodiment, a print instruction is sent from the client computer 14 to the printing apparatus 12 via the management apparatus 11, an image corresponding to the print instruction is formed in the printing apparatus 12.

In FIG. 1, one management apparatus 11, one printing apparatus 12, and one client computer 14 are shown, but each of the apparatuses may be plural or any of the apparatuses may be plural.

The printing apparatus 12 according to the present exemplary embodiment has a plurality of functions such as a printing function of performing printing processing and a post-processing function of performing post-processing on printed paper. The plurality of functions may include a scanning function of scanning a manuscript to obtain image information representing the manuscript, a duplicating function of duplicating an image recorded in the manuscript on paper, a facsimile function of transmitting and receiving various data via a telephone line (not shown), a transfer function of transferring manuscript information such as the image information scanned by the scanning function, and an accumulating function of accumulating the manuscript information such as the scanned image information.

In the following description, the facsimile function may be referred to as a fax, the scanning function may be referred to as a scan, the printing function may be referred to as a print, and the duplicating function may be referred to as a copy.

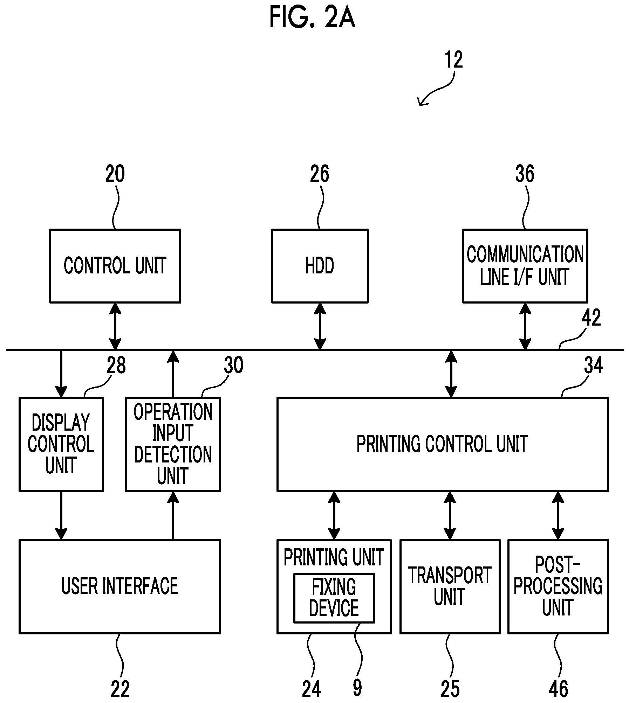

FIG. 2A is a block diagram showing a major configuration of an electrical system of the printing apparatus 12 in the information processing system 10 according to the present exemplary embodiment.

As shown in FIG. 2A, the printing apparatus 12 according to the present exemplary embodiment includes a control unit 20. The control unit 20 may include a central processing unit (CPU), a read only memory (ROM), and a random access memory (RAM).

Meanwhile, the printing apparatus 12 according to the present exemplary embodiment includes a hard disk drive (HDD) 26 that stores various data, application programs, and the like. In addition, the printing apparatus 12 includes a display control unit 28 that is connected to a user interface 22 and that controls display of various operation screens and the like on a display of the user interface 22. In addition, the printing apparatus 12 includes an operation input detection unit 30 that is connected to the user interface 22 and that detects an operation instruction input via the user interface 22. In the printing apparatus 12, the HDD 26, the display control unit 28, and the operation input detection unit 30 are electrically connected to a system bus 42. In the printing apparatus 12 according to the present exemplary embodiment, the HDD 26 is applied as a storage unit, but the present disclosure is not limited to this, and a non-volatile storage unit such as a flash memory may be applied. In addition, in the present exemplary embodiment, a touch panel that can perform display and operation input is applied to the user interface 22, but the present disclosure is not limited to this, and a user interface in which a display and an operation unit are separate may be applied.

In addition, the printing apparatus 12 according to the present exemplary embodiment includes a printing control unit 34 that controls printing processing by a printing unit 24, transport of paper to the printing unit 24 by a transport unit 25, and post-processing by a post-processing unit 46. The printing apparatus 12 may include a scanning control unit that controls an optical image scanning operation by a manuscript scanning unit and a manuscript feeding operation by a manuscript transport unit. In addition, the printing apparatus 12 includes a communication line interface (I/F) unit 36 that is connected to the communication line 18 and that transmits and receives communication data to and from other external apparatuses such as the client computer 14 connected to the communication line 18. In addition, the printing apparatus 12 may include a facsimile interface (I/F) unit that is connected to a telephone line (not shown) and that transmits and receives facsimile data to and from a facsimile apparatus connected to the telephone line. In addition, the printing apparatus 12 may include a transmission and reception control unit that controls transmission and reception of the facsimile data via the facsimile I/F unit. In the printing apparatus 12, the printing control unit 34 and the communication line I/F unit 36 are electrically connected to the system bus 42.

The printing unit 24 fixes a toner image transferred from a photoreceptor onto printing paper by using an electrophotographic method. The printing unit 24 includes a fixing device 9 that fixes, to the printing paper, the toner image transferred onto the printing paper.

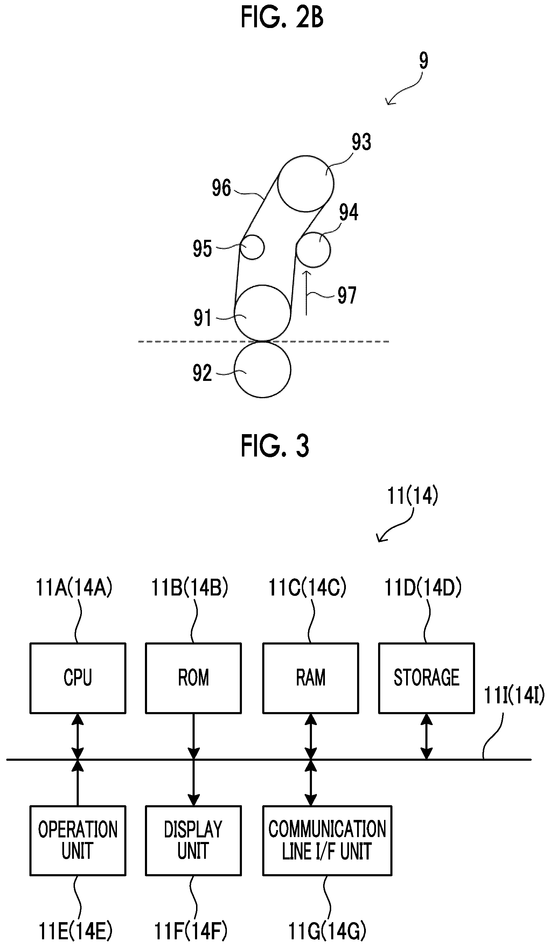

As shown in FIG. 2B, the printing paper onto which the toner image has been transferred is heated and pressurized by the fixing device 9, so that the toner image is fixed onto the printing paper.

Specifically, the fixing device 9 includes a heating roll 91, a pressurizing roll 92, a drive roll 93, an external heating roll 94, an auxiliary roll 95, and a fixing belt 96. The fixing belt 96 is stretched around the heating roll 91 and the drive roll 93 and rotates in a direction of an arrow 97, for example, following rotation of the drive roll 93.

The heating roll 91 has a heat generating element therein, and heats the fixing belt 96 that rotates while in contact with the heating roll 91 with heat emitted from the heat generating element. The drive roll 93 is rotationally driven by a motor (not shown) and rotates the fixing belt 96 in the direction of the arrow 97 by using a frictional force with the fixing belt 96 that is stretched around the drive roll 93. **In** addition, the external heating roll 94 includes a heat generating element as with the heating roll 91, and heats the fixing belt 96 from a side opposite to a surface of the fixing belt 96 heated by the heating roll 91. The pressurizing roll 92 is disposed at a position facing the heating roll 91, and transports the printing paper while sandwiching the printing paper onto which the toner image is transferred and the fixing belt 96 in a fixing nip portion formed by the pressurizing roll 92 and the heating roll 91. **In** the fixing nip portion, the fixing belt 96 heated by the heating roll 91 is pressed against the printing paper onto which the toner image is transferred, and the heat of the fixing belt 96 promotes drying of the toner image, thereby fixing the toner image onto the printing paper.

As long as the toner image is fixed onto the printing paper while being pressurized, the configuration of the fixing device is not limited. For example, the fixing device 9 may be in a form in which the fixing belt 96 is attached around the heating roll 91. **In** this case, the drive roll 93, the external heating roll 94, and the auxiliary roll 95 are unnecessary.

With the above configuration, the printing apparatus 12 according to the present exemplary embodiment uses the control unit 20 to execute control of display of an operation screen and information, such as various messages, on the display of the user interface 22 via the display control unit 28. In addition, the printing apparatus 12 uses the control unit 20 to execute each of the control of the operation of the printing unit 24, the transport unit 25, and the post-processing unit 46 via the printing control unit 34, and the control of the transmission and reception of the communication data via the communication line I/F unit 36. Further, the printing apparatus 12 uses the control unit 20 to ascertain operation content in the user interface 22 based on operation information, which is detected by the operation input detection unit 30, and to execute various kinds of control based on the operation content.

As an example of the applications stored in the HDD 26, in the present exemplary embodiment, an application that executes a function such as printing is included.

Subsequently, a major configuration of an electrical system of the management apparatus 11 and the client computer 14 according to the present exemplary embodiment will be described. FIG. 3 is a block diagram showing the major configuration of the electrical system of the management apparatus 11 and the client computer 14 in the information processing system 10 according to the present exemplary embodiment. Since the management apparatus 11 and the client computer 14 have a general computer configuration, the management apparatus 11 will be described below as a representative example.

As shown in FIG. 3, the management apparatus 11 according to the present exemplary embodiment includes a CPU 11A as an example of a processor, a ROM 11B, a RAM 11C, a storage 11D, an operation unit 11E, a display unit 11F, and a communication line interface (I/F) unit 11G. The CPU 11A controls the overall operation of the management apparatus 11. The ROM 11B stores various control programs, various parameters, and the like in advance. The RAM 11C is used as a work area or the like in a case where various programs are executed by the CPU 11A. The storage 11D stores various data, application programs, and the like. The operation unit 11E is used to input various types of information. The display unit 11F is used to display the various types of information. The communication line I/F unit 11G is connected to the communication line 18 and transmits and receives various data to and from other apparatuses connected to the communication line 18. In addition, the communication line I/F unit 11G may be configured to be capable of directly communicating with each device by using various well-known wireless communications. Each unit of the management apparatus 11 described above is electrically connected to each other by a system bus 11I. In the management apparatus 11 according to the present exemplary embodiment, the storage 11D is applied as a storage unit, but, as an example of the storage, a non-volatile storage unit, such as a hard disk drive (HDD) or a flash memory, is applied.

With such a configuration, in the management apparatus 11 according to the present exemplary embodiment, the CPU 11A executes accesses to the ROM 11B, the RAM 11C, and the storage 11D, acquisition of various data via the operation unit 11E, and display of various types of information on the display unit 11F. In addition, the management apparatus 11 executes control of transmission and reception of the communication data via the communication line I/F unit 11G using the CPU 11A.

In the information processing system 10 having the above-described configuration, the management apparatus 11 manages a series of manufacturing processes. The series of manufacturing processes includes, for example, a prepress process, a plate-making process, a printing process, and a finishing process.

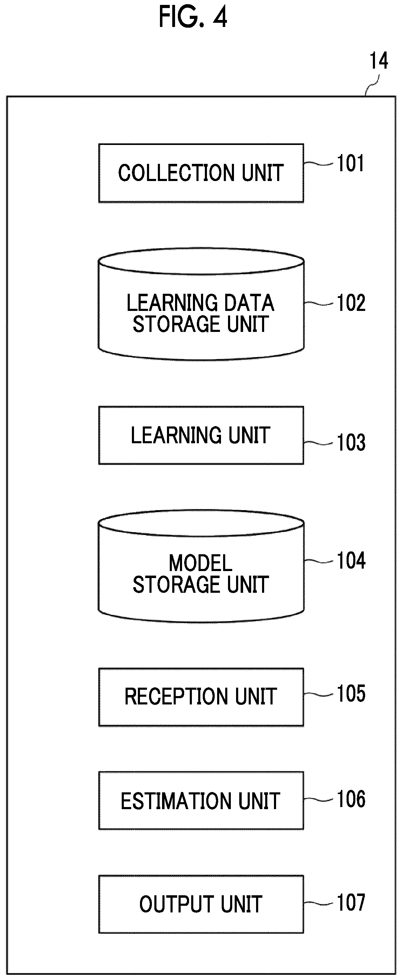

Next, a functional configuration of the client computer 14 will be described. FIG. 4 is a block diagram showing an example of the functional configuration of the client computer 14.

Functionally, as shown in FIG. 4, the client computer 14 includes a collection unit 101, a learning data storage unit 102, a learning unit 103, a model storage unit 104, a reception unit 105, an estimation unit 106, and an output unit 107.

The collection unit 101 collects learning data including a pair of input information that includes information about the printing paper and a fixing temperature of the fixing device 9 in the printing apparatus 12, the pair being experimentally obtained for each combination of a type of the fixing device 9 and a type of the fixing belt 96. For example, a developer of the printing apparatus 12 experimentally obtains a pair of input information that includes information about the printing paper and an optimum fixing temperature of the fixing device 9 in the printing apparatus 12 for the input information, for each combination of the type of the fixing device 9 and the type of the fixing belt 96.

The input information may include information about the printing paper. The information about the printing paper may include a basis weight of the printing paper or a type of the printing paper. Specifically, the type of printing paper includes coated paper, matte paper, uncoated paper, and fine paper.

The management apparatus 11 has experimental information including a pair of input information that includes information about the printing paper and a fixing temperature of the fixing device 9 in the printing apparatus 12, the pair being experimentally obtained for each combination of a type of the fixing device 9 and a type of the fixing belt 96.

The collection unit 101 collects, from the experimental information held by the management apparatus 11, pairs of input information that includes information about the printing paper and a fixing temperature of the fixing device 9 in the printing apparatus 12 for each combination of a type of the fixing device 9 and a type of the fixing belt 96, as learning data.

The learning data storage unit 102 stores a plurality of learning data collected by the collection unit 101.

The learning unit 103 uses input information as an input based on a plurality of learning data, and constructs a neural network model for estimating the fixing temperature of the fixing device 9 corresponding to the input information, for each combination of the type of the fixing device 9 and the type of the fixing belt 96.

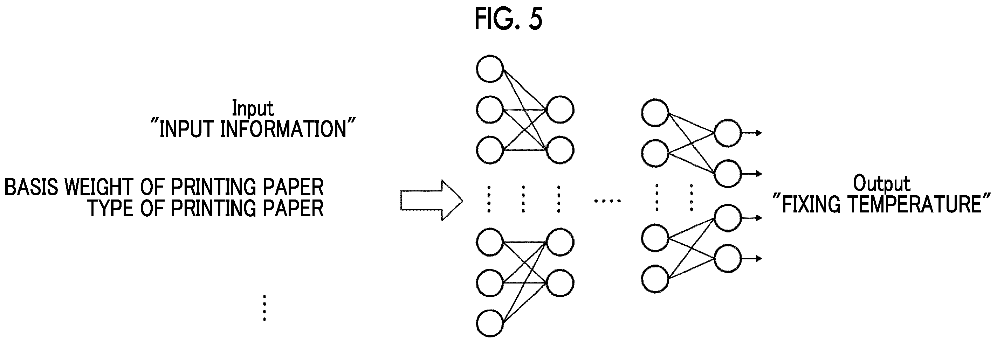

Specifically, the trained neural network model receives an input of input information including at least one of the basis weight of the printing paper or the type of the printing paper, and outputs a fixing temperature of the fixing device 9 corresponding to the input information (see FIG. 5). Deep learning can be used as an example of a learning algorithm, and a neural network model may be constructed such that, in a case where input information of learning data is input, a fixing temperature of the learning data is output.

More specifically, the input information of the learning data may be used as an input, and the fixing temperature of the fixing device 9 may be estimated as an output of the model, and the estimated fixing temperature of the fixing device 9 may be compared with a fixing temperature of the fixing device 9 in the learning data to calculate an error in the fixing temperature of the fixing device 9, and parameters of the model may be updated so as to minimize an error value.

Here, a correlation between various types of information included in the input information and the fixing temperature of the fixing device 9 will be described.

First, the optimum fixing temperature for maintaining the image quality of the printed image varies depending on the combination of the basis weight of the printing paper and the type of printing paper. Therefore, there is a correlation between the basis weight of the printing paper and the type of the printing paper and the fixing temperature of the fixing device 9.

Further, the optimum fixing temperature for maintaining the image quality of the printed image varies depending on the combination of the type of the fixing device 9 and the type of the fixing belt 96. Therefore, the combination of the type of the fixing device 9 and the type of the fixing belt 96 affects the correlation between the basis weight of the printing paper and the type of the printing paper and the fixing temperature of the fixing device 9.

The model storage unit 104 stores a trained neural network model for each combination of the type of the fixing device 9 and the type of the fixing belt 96.

The reception unit 105 receives input information related to a new print job to be estimated.

The input information includes information about the printing paper. The information about the printing paper may include a basis weight of the printing paper or a type of the printing paper. For example, the basis weight "120 gsm" of the printing paper and the type "uncoated paper" of the printing paper input from the user are received. Alternatively, the basis weight "120 gsm" of the printing paper and the type "uncoated paper" of the printing paper estimated from the sensor output in the printing apparatus 12 are received.

The reception unit 105 receives a configuration of the fixing device 9 in the printing apparatus 12 related to the new print job.

The configuration of the fixing device 9 includes the type of the fixing device 9 and the type of the fixing belt 96. The type of the fixing device 9 includes, for example, a name or a model number for identifying the type of the fixing device 9. The type of the fixing belt 96 includes, for example, a name or a model number for identifying the type of the fixing belt 96.

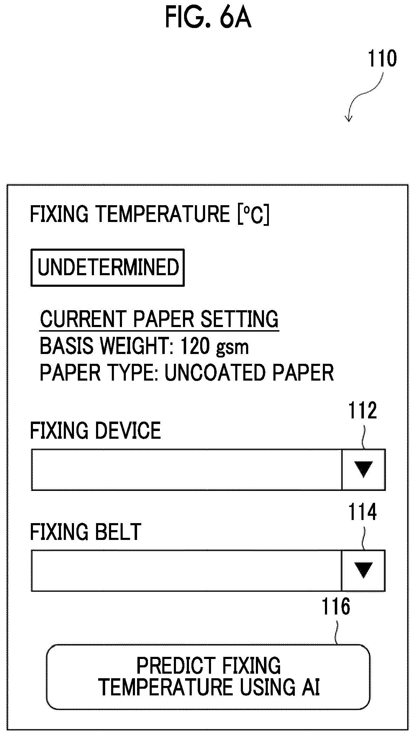

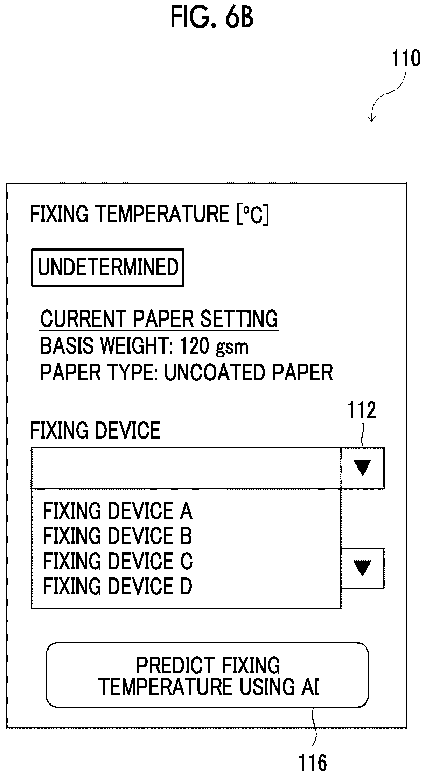

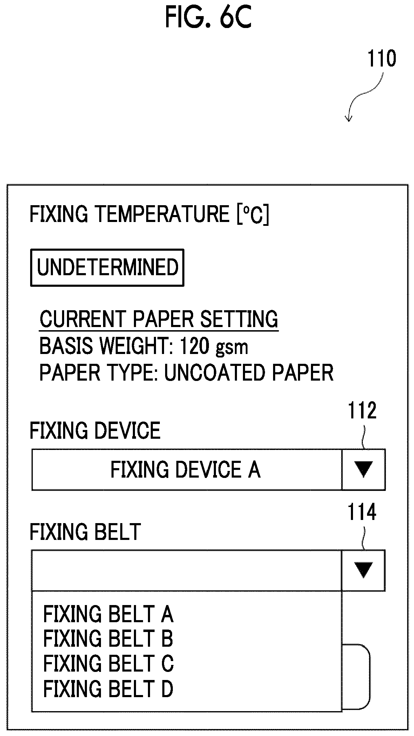

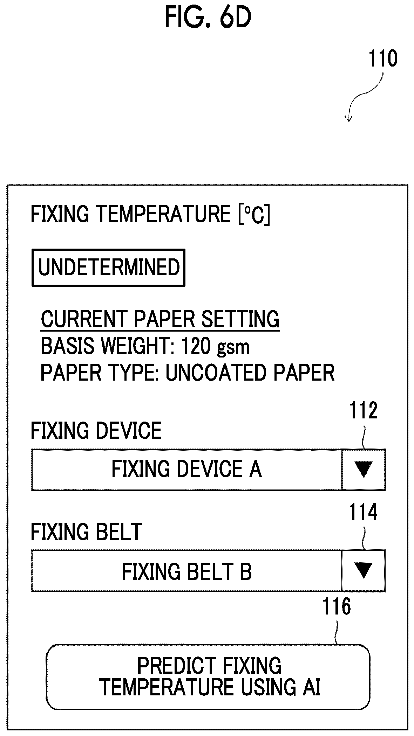

The reception unit 105 displays, for example, a selection screen 110 as shown in FIG. 6A on the user interface 22 of the printing apparatus 12. As shown in FIG. 6B, the reception unit 105 displays the types of the fixing device 9 (fixing device A, fixing device B, fixing device C, and fixing device D) in a selection box 112 and receives a selection from the user. In addition, as shown in FIG. 6C, the reception unit 105 displays the types of the fixing belt 96 (fixing belt A, fixing belt B, fixing belt C, or fixing belt D) in a selection box 114 and receives a selection from the user. In addition, as shown in FIG. 6D, the reception unit 105 receives the selection of the type of the fixing device 9 and the selection of the type of the fixing belt 96, and then receives a pressing operation on a button 116 from the user to request prediction of the fixing temperature.

The estimation unit 106 acquires a trained neural network model corresponding to the selected combination of the type of the fixing device 9 and the type of the fixing belt 96 from the trained neural network model stored in the model storage unit 104. The estimation unit 106 estimates the fixing temperature of the fixing device 9 corresponding to the received input information by using the acquired trained neural network model.

Specifically, various types of information included in the received input information are converted into a data structure (for example, a scalar value or a vector) that can be input to the trained neural network model and input to the trained neural network model, and the fixing temperature of the fixing device 9 is estimated from the output of the trained model.

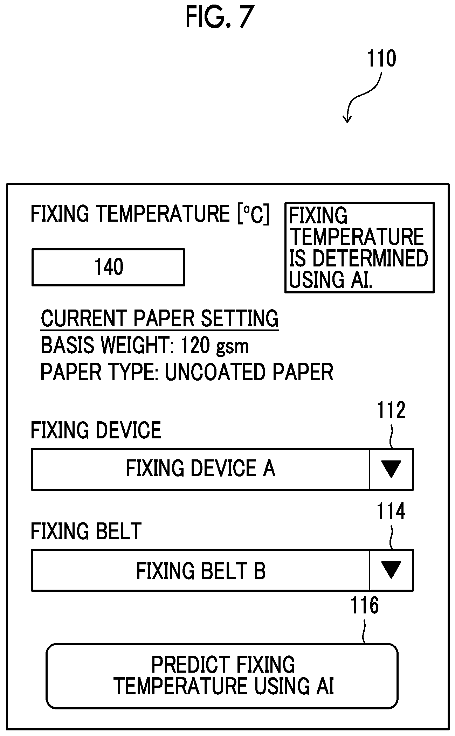

As shown in FIG. 7, the output unit 107 presents the estimated fixing temperature of the fixing device 9 to the user. FIG. 7 shows an example in which 140°C is presented as the estimated fixing temperature of the fixing device 9 on the selection screen 110 displayed on the user interface 22 of the printing apparatus 12. Accordingly, the user can ascertain the estimated fixing temperature of the fixing device 9. In addition, the output unit 107 outputs the estimated fixing temperature of the fixing device 9 to the printing apparatus 12, and sets the output estimated fixing temperature as the fixing temperature of the fixing device 9 of the printing apparatus 12.

Next, specific processing performed by the information processing system 10 according to the present exemplary embodiment configured as described above will be described.

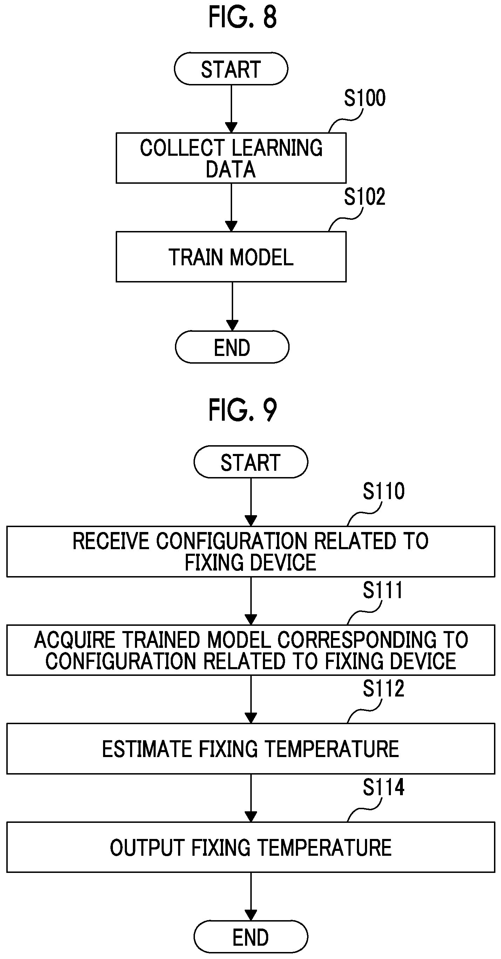

First, in the client computer 14, the CPU 14A reads out a learning program from the ROM 14B or the storage 14D, and loads the learning program into the RAM 14C and executes the learning program, thereby performing a learning process shown in FIG. 8.

In step S100, as the collection unit 101, the CPU 14A collects, from the experimental information held by the management apparatus 11, pairs of input information that includes information about the printing paper and a fixing temperature of the fixing device in the printing apparatus for each combination of a type of the fixing device and a type of the fixing belt, and stores the pairs in the learning data storage unit 102.

In step S102, as the learning unit 103, the CPU 14A uses input information as an input based on a plurality of learning data, trains a neural network model for estimating the fixing temperature of the fixing device corresponding to the input information, for each combination of the type of the fixing device and the type of the fixing belt, stores the neural network model in the model storage unit 104, and ends the learning process.

Next, in the client computer 14, the CPU 14A reads out an estimation program from the ROM 14B or the storage 14D and loads the estimation program into the RAM 14C and executes the estimation program, thereby performing an estimation process shown in FIG. 9. In this case, it is assumed that various types of information included in the input information in a new print job to be estimated are input.

In step S110, as the reception unit 105, the CPU 14A receives, from the user, a combination of the type of the fixing device 9 and the type of the fixing belt 96 as a configuration of the fixing device 9 in the printing apparatus 12 related to the new print job.

In step S111, as the estimation unit 106, the CPU 14A acquires a trained neural network model corresponding to the received combination of the type of the fixing device 9 and the type of the fixing belt 96 from the trained neural network model stored in the model storage unit 104.

In step S112, as the estimation unit 106, the CPU 14A estimates the fixing temperature of the fixing device 9 corresponding to the received input information, by using the trained neural network model acquired in step S111.

In step S114, as the output unit 107, the CPU 14A presents the estimated fixing temperature of the fixing device 9 to the user, outputs the estimated fixing temperature to the printing apparatus 12, and ends the estimation process. The printing apparatus 12 sets the fixing temperature of the fixing device 9 input from the client computer 14 and performs printing on the printing paper.

By performing the process as described above, the fixing temperature of the fixing device may be predicted according to the printing paper, taking into account the configuration related to the fixing device in the printing apparatus.

In addition, there are many combinations of the type of the fixing device and the type of the fixing belt. A physical relationship between the combination of the type of fixing device and the type of fixing belt and the fixing temperature is modeled using a trained model. A trained model for predicting the fixing temperature of the fixing device is switched depending on the type of the fixing device and the type of the fixing belt in the printing apparatus. As a result, the prediction accuracy of the fixing temperature can be improved by using a trained model optimized for the model of the printing apparatus.

In addition, the user can select the type of the fixing device and the type of the fixing belt in the printing apparatus on the screen of the user interface, and can use the optimum trained model according to the selection.

### <Modification Example>

The present invention is not limited to the above-described exemplary embodiment, and various modifications and applications are possible without departing from the gist of the present invention.

For example, the trained neural network model may be trained in advance for each combination of the configuration related to the fixing device and information about toner. In this case, the reception unit further receives, as information related to toner in the printing apparatus 12 related to a new print job, a type of toner to be used (for example, monochrome toner, four-color toner, six-color toner, or gold and silver toner) from the user. The estimation unit acquires a trained neural network model corresponding to the received combination of the type of the fixing device, the type of the fixing belt, and the type of the toner from the trained neural network model stored in the model storage unit. The estimation unit estimates the fixing temperature of the fixing device 9 corresponding to the received input information by using the acquired trained neural network model.

In addition, although a case where the selection screen is displayed on the user interface of the printing apparatus and the selection of the type of the fixing device and the type of the fixing belt is received has been described as an example, the present invention is not limited to this. The selection screen may be displayed on a user interface of a user terminal (not shown) held by the user, and the selection of the type of the fixing device and the type of the fixing belt may be received.

In addition, although a case where the various types of input information are received and the fixing temperature of the fixing device is estimated has been described as an example, it may also be possible to receive only a portion of the various types of input information rather than receiving all of the various types of input information and estimate the fixing temperature of the fixing device.

In addition, although a case where the client computer 14 trains the model and estimates the fixing temperature of the fixing device has been described as an example, it may also be configured as being separated into a learning device that trains the model and an estimation device that estimates the fixing temperature of the fixing device.

In the exemplary embodiments, the processes are performed by any computer. The computer may perform the processes by using a processor serving as hardware, a program serving as software, or combination of these.

In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In addition, the "system" in the present exemplary embodiment is described as an example of a system configured to include a plurality of apparatus, but may be configured to include a single apparatus having functions of some parts of the plurality of apparatus.

The processes performed by the printing apparatus 12 according to the above exemplary embodiment may be processes performed by software, processes performed by hardware, or a combination of both. In addition, the processes performed by the printing apparatus 12 may be stored in a storage medium as a program and distributed.

In addition, the present disclosure is not limited to the above description, and various modifications other than the above description may be made without departing from the gist thereof.

Regarding the above exemplary embodiments, the following supplementary notes will be further disclosed.
(((1))) An information processing system comprising:
   a processor configured to:
   input, to a trained model corresponding to a configuration related to a fixing device in a printing apparatus that is to perform a new print job among trained models that have been trained in advance for each configuration related to the fixing device in the printing apparatus in order to output a fixing temperature of the fixing device in a case of receiving input information including information about printing paper, new input information including information about printing paper to be newly printed, and output a fixing temperature of the fixing device in the printing apparatus that is to perform the new print job.
(((2))) The information processing system according to (((1))),
   wherein the configuration related to the fixing device includes at least one of a type of the fixing device or a type of a fixing belt.
(((3))) The information processing system according to (((1))) or (((2))),
   wherein the trained models are trained in advance for each combination of the configuration related to the fixing device and information about toner, and
   the processor is configured to:
      input, to a trained model corresponding to a combination of the configuration related to the fixing device and the information about the toner in the printing apparatus that is to perform a new print job among the trained models that have been trained in advance for each combination of the configuration related to the fixing device and the information about the toner, new input information including information about printing paper to be newly printed, and output a fixing temperature of the fixing device in the printing apparatus that is to perform the new print job.
(((4))) The information processing system according to any one of (((1))) to (((3))),
   wherein the information about the printing paper includes a basis weight of the printing paper or a type of the printing paper.
(((5))) The information processing system according to any one of (((1))) to (((4))), wherein the processor is further configured to:
   on the printing apparatus that is to perform the new print job or a user terminal, display a screen for receiving a selection of the configuration related to the fixing device in the printing apparatus from a user; and
   input the new input information to a trained model corresponding to the received selection of the configuration related to the fixing device, and output a fixing temperature of the fixing device in the printing apparatus that is to perform the new print job.
(((6))) An information processing program causing a computer to execute:
   inputting, to a trained model corresponding to a configuration related to a fixing device in a printing apparatus that is to perform a new print job among trained models that have been trained in advance for each configuration related to the fixing device in the printing apparatus in order to output a fixing temperature of the fixing device in a case of receiving input information including information about printing paper, new input information including information about printing paper to be newly printed, and outputting a fixing temperature of the fixing device in the printing apparatus that is to perform the new print job.

According to (((1))), it is possible to predict the fixing temperature of the fixing device according to the printing paper, taking into account the configuration related to the fixing device in the printing apparatus.

According to (((2))), it is possible to predict the fixing temperature of the fixing device according to the printing paper, taking into account at least one of the type of the fixing device or the type of the fixing belt in the printing apparatus.

According to (((3))), it is possible to predict the fixing temperature of the fixing device according to the printing paper, taking into account the configuration related to the fixing device and the information about the toner in the printing apparatus.

According to (((4))), it is possible to predict the fixing temperature of the fixing device according to the basis weight of the printing paper or the type of the printing paper.

According to (((5))), it is possible to predict the fixing temperature of the fixing device according to the printing paper, taking into account the configuration related to the fixing device in the printing apparatus, which is received from the user.

According to (((6))), it is possible to predict the fixing temperature of the fixing device according to the printing paper, taking into account the configuration related to the fixing device in the printing apparatus.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 9:: **fixing** device
- 10:: information processing system
- 11:: management apparatus
- 12:: printing apparatus
- 14:: client computer
- 24:: printing unit
- 96:: fixing belt
- 101:: collection unit
- 102:: learning data storage unit
- 103:: learning unit
- 104:: model storage unit
- 105:: reception unit
- 106:: estimation unit
- 107:: output unit
- 110:: selection screen

## Claims

1. An information processing system comprising:
a processor configured to:
input, to a trained model corresponding to a configuration related to a fixing device in a printing apparatus that is to perform a new print job among trained models that have been trained in advance for each configuration related to the fixing device in the printing apparatus in order to output a fixing temperature of the fixing device in a case of receiving input information including information about printing paper, new input information including information about printing paper to be newly printed, and output a fixing temperature of the fixing device in the printing apparatus that is to perform the new print job.

2. The information processing system according to claim 1,
wherein the configuration related to the fixing device includes at least one of a type of the fixing device or a type of a fixing belt.

3. The information processing system according to claim 1 or 2,
wherein the trained models are trained in advance for each combination of the configuration related to the fixing device and information about toner, and
the processor is configured to:
input, to a trained model corresponding to a combination of the configuration related to the fixing device and the information about the toner in the printing apparatus that is to perform a new print job among the trained models that have been trained in advance for each combination of the configuration related to the fixing device and the information about the toner, new input information including information about printing paper to be newly printed, and output a fixing temperature of the fixing device in the printing apparatus that is to perform the new print job.

4. The information processing system according to any one of claims 1 to 3,
wherein the information about the printing paper includes a basis weight of the printing paper or a type of the printing paper.

5. The information processing system according to any one of claims 1 to 4, wherein the processor is further configured to:
on the printing apparatus that is to perform the new print job or a user terminal, display a screen for receiving a selection of the configuration related to the fixing device in the printing apparatus from a user; and
input the new input information to a trained model corresponding to the received selection of the configuration related to the fixing device, and output a fixing temperature of the fixing device in the printing apparatus that is to perform the new print job.

6. An information processing program causing a computer to execute:
inputting, to a trained model corresponding to a configuration related to a fixing device in a printing apparatus that is to perform a new print job among trained models that have been trained in advance for each configuration related to the fixing device in the printing apparatus in order to output a fixing temperature of the fixing device in a case of receiving input information including information about printing paper, new input information including information about printing paper to be newly printed, and outputting a fixing temperature of the fixing device in the printing apparatus that is to perform the new print job.

7. An information processing method comprising:
inputting, to a trained model corresponding to a configuration related to a fixing device in a printing apparatus that is to perform a new print job among trained models that have been trained in advance for each configuration related to the fixing device in the printing apparatus in order to output a fixing temperature of the fixing device in a case of receiving input information including information about printing paper, new input information including information about printing paper to be newly printed, and outputting a fixing temperature of the fixing device in the printing apparatus that is to perform the new print job.

## Amended claims

### Amended claims in accordance with Rule 137(2) EPC.

1. An information processing system (10) comprising:
a processor (11A, 14A) configured to:
input, to a trained model corresponding to a configuration related to a fixing device (9) in a printing apparatus (12) that is to perform a new print job among trained models that have been trained in advance for each configuration related to the fixing device (9) in the printing apparatus (12) in order to output a fixing temperature of the fixing device (9) in a case of receiving input information including information about printing paper, new input information including information about printing paper to be newly printed, and output the fixing temperature of the fixing device (9) in the printing apparatus (12) that is to perform the new print job,
wherein the printing apparatus (12) is configured to perform the new print job by using an electrophotographic method,
**characterized in that**:
wherein the configuration related to the fixing device (9) includes at least one of a type of the fixing device (9) and a type of a fixing belt (96).

2. The information processing system (10) according to claim 1,
wherein the trained models are trained in advance for each combination of the configuration related to the fixing device (9) and information about toner, and
the processor (11A, 14A) is configured to:
input, to a trained model corresponding to a combination of the configuration related to the fixing device (9) and the information about the toner in the printing apparatus (12) that is to perform a new print job among the trained models that have been trained in advance for each combination of the configuration related to the fixing device (9) and the information about the toner, new input information including information about printing paper to be newly printed, and output the fixing temperature of the fixing device (9) in the printing apparatus (12) that is to perform the new print job.

3. The information processing system (10) according to any one of claims 1 to 2,
wherein the information about the printing paper includes a basis weight of the printing paper or a type of the printing paper.

4. The information processing system (10) according to any one of claims 1 to 3, wherein the processor (11A, 14A) is further configured to:
on the printing apparatus (12) that is to perform the new print job or a user terminal, display a screen (110) for receiving a selection of the configuration related to the fixing device (9) in the printing apparatus (12) from a user; and
input the new input information to a trained model corresponding to the received selection of the configuration related to the fixing device (9), and output a fixing temperature of the fixing device (9) in the printing apparatus (12) that is to perform the new print job.

5. An information processing program causing a computer to execute:
inputting, to a trained model corresponding to a configuration related to a fixing device (9) in a printing apparatus (12) that is to perform a new print job among trained models that have been trained in advance for each configuration related to the fixing device (9) in the printing apparatus (12) in order to output a fixing temperature of the fixing device (9) in a case of receiving input information including information about printing paper, new input information including information about printing paper to be newly printed, and outputting the fixing temperature of the fixing device (9) in the printing apparatus (12) that is to perform the new print job,
wherein the printing apparatus (12) is configured to perform the new print job by using an electrophotographic method,
**characterized in that**:
wherein the configuration related to the fixing device (9) includes at least one of a type of the fixing device (9) and a type of a fixing belt (96).

6. An information processing method, performed by a processor (11A, 14A) of an information processing system (10), comprising:
inputting, to a trained model corresponding to a configuration related to a fixing device (9) in a printing apparatus (12) that is to perform a new print job among trained models that have been trained in advance for each configuration related to the fixing device (9) in the printing apparatus (12) in order to output a fixing temperature of the fixing device (9) in a case of receiving input information including information about printing paper, new input information including information about printing paper to be newly printed, and outputting the fixing temperature of the fixing device (9) in the printing apparatus (12) that is to perform the new print job,
wherein the printing apparatus (12) is configured to perform the new print job by using an electrophotographic method,
**characterized in that**:
wherein the configuration related to the fixing device (9) includes at least one of a type of the fixing device (9) and a type of a fixing belt (96).
